# EUROPEAN PATENT APPLICATION

(11) **EP 2 503 502 A1**
(43) Date of publication of application: **26.09.2012**
(21) Application number: 10831277.8
(22) Date of filing: 29.07.2010
(51) Int. Cl.: G06Q 50/00, G06Q 10/00

(54) **SOCCER PREDICTION VOTING SYSTEM**

(30) Priority: 18.11.2009 JP 2009263064
(71) Applicant: K&I Inc., Tokyo 100-0013 (JP)
(72) Inventor: KOYAMA, Kasumi, Tokyo 168-0082 (JP)
(74) Representative: Deschamps, Samuel
(86) International application number: PCT/JP2010/004822
(87) International publication number: WO 2011/061877

(57) **Abstract**

[Object]

Submit a *predicted* vote system for soccer that will allow anyone using a cellular phone to participate in.

[SOLVING MEANS]

The application server 5 extracts the hit votes from the data saved in the memory means in the first time frame by extraction means.

The extracted hit votes are counted, counted hit votes are transmitted to mobile terminal 4 with total votes.

For a mobile terminal transmitting a message, it may be only the mobile terminal which made hit votes.

And, when the second time frame passed, the hit votes in the second time frame become clear. Thus, the application server 5 extracts the hit votes in the second time frame by extraction means, extracted hit votes are limited from hit votes of the first time frame. That is, only the votes that proved right twice in succession are extracted.

In this way, the extraction will repeat until (81-90 minutes) in a final time frame, hit votes in (81-90 minutes) are extracted in a final time frame, the numbers are counted, and it is assumed as the final hit votes.

The points or the prize money are divided by this (*number of*) final hit votes, the value becomes the allotment point (dividend) to a hit voter.

## Description

### [Field of the Invention]

The present invention relates to a system for submitting and recording the predicted results of a soccer match via a mobile terminal such as a cellular phone.

### [Background Art]

Systems for betting on the predicted outcome of soccer matches have been popular for a long time. This form of betting or lottery is known by various names e.g. totocalcio in Italy, football pools in the UK and Quiniela in Spain This form of betting has recently spread to Japan in the form of Sports Promotion Lottery (ToTo).

However, taking the Sports Promotion Lottery as an example there is a limit on the number of people able to participate and this is causing a serious problem.
Thus in order to increase the number of participants, Prior Art 1 discloses an input method for predicted victory or defeat through a network using connecting terminals such as cellular phones.

And Prior Art 2 suggests further ideas, this suggestion does not only merely enable a vote using the cellular phone.
That is, a competition is divided beforehand in a plurality of allotment count sections, a financial funds point is provided at the time of participation, and these financial funds point is subtracted from every vote, a vote is possible repeatedly until a point becomes zero, a vote record is extracted with the count section number after a competition, a vote point and a hit vote point are added up every count section, the value that divided the former by the latter is assumed a dividend rate, the dividend rate is multiplied by the vote point of the vote record of the member who hit the mark, and the member gets these points.

Also, Prior art 3 discloses a purchase system of the lottery, this purchase system sells a lottery predicting the result of each game about a plurality of games with the other teams which a certain team performs during a scheduled period, and it enables a purchase to be made even if the first game has started, and a remaining game exists in the period to a final game.

Also, Prior art 4 proposes a system of expecting score, the score is at the particular point in time at the time of a quarter of the way through the match, at half time or at the end of the game. However, the system disclosed in Prior art 4 is not a voting system using a mobile terminal.
Also, Prior art 5 proposes the system of the quiz show using the cellular phone, that is, in an audience responding to a quiz only a person giving a correct answer to a question is given the right to answer the next question.

### [Prior art]

### [Patented Documents]

[Prior art 1] Japanese Laid Open Patent Publication 2002-133020
[Prior art 2] Japanese Laid Open Patent Publication 2009-140187
[Prior art 3] Japanese Laid Open Patent Publication 2009-230639
[Prior art 4] Japanese Laid Open Patent Publication 2007-535383
[Prior art 5] Japanese Laid Open Patent Publication H09-065308

### [Disclosure of the Invention]

### [Object of the Invention]

The expected vote system of the conventional soccer, is on the basis of guessing the victory, defeat or draw of a plurality of games, thus, a lottery cannot be enjoyed while watching all games, because the games that are not of interest to oneself must be expected or a plurality of games that oneself expected conflict.

Also, when it is supposed that Prior art 2 was applied to soccer, the full time of one game will be mediated in a plurality of allotment count sections, however, a rule of Prior art 2 is complicated, and cannot gather many participants, for example, a vote is enabled in each allotment count sections, and a dividend rate changes for each and every allotment count section.

Also, as Prior art 4 proposes, when predicting the score at a particular point during a game, there is no predictive fun or incremental fun as there is no opportunity to increase one's winnings.

In addition, to attain a full victory such as Prior art 5, the system can narrow down the number of people giving the correct answer in every quiz. However, this method cannot be applied to the present invention concerned method that set a plurality of time frames.
For example, when the time frame of from 11 minutes to 20 minutes is considered, the player will not respond till the limit of the 20 minutes, it is conceivable that a vote concentrates on the last of the time frame, and the processing capacity of the server is exceeded, also, most become a hit a correct prediction, and the number of people with the correct answer cannot be reduced.

### [Means of solving the problems]

In order to solve above-mentioned problems, a system for submitting the predicted results of a soccer match of the present invention, comprised an application server which is connected to the network and a mobile terminal which two-way communication is possible such as the cellular phone,
Said application server is provided a CPU executing a vote program, and the vote program gives the following functions to the application server.
A transmitting means to transmit a score list to fill in expected score to the mobile terminal, the score list provides the column with divided time from a start time to fulltime of the match, using every predetermined time.
A determining means to determine ID, the ID that has been transmitted by a mobile terminal is recognized, and the recognized ID is compared with the ID registered with the application server beforehand, when these IDs are in accordance, the vote from the mobile terminal is accepted.
A memory means to memorize and store an expected vote connecting with above ID, the expected vote is written on a score list from the mobile terminal which is permitted to vote.
An extraction means to extract only hit votes from expected votes which stored in the memory means, at first, compare the real score with the expected score which is filled in the entry column of the first frame of the score list, and extract only hit votes, and compare the real score with the expected score which is filled in the entry column of the second frame of the score list, and extract only hit votes, among hit votes extracted in the first frames, this extraction is performed sequentially afterward along the time frame.
A counting means to count the number of hit votes in the last time frames when a hit vote exists.
A computing means to divide the points or the prize money by the number of final hit vote which is counted by the counting means.
A transmitting means to inform the number of hit vote which is extracted by the extraction means to the mobile terminal of the voter after each time frame is finished, and to inform the divided points or prize money to the mobile terminal which made a hit vote that survived until a final time frame, this mobile terminal is identified by ID referenced to the hit vote.

With the predetermined time, five minutes, ten minutes or 15 minutes intervals are preferable.
When the predetermined time is ten minutes, it allocates five minutes before the end of the first half and the first five minutes of the second half as one time interval.
Also, the loss time incorporates for last ten minutes of the first half or the second half, even more particularly, in the presence of extra time, it is conceivable that it incorporates for last ten minutes of the second half.

The ID includes ID peculiar to the apparatus of each mobile terminal such as SIM card number, the member number of the expectation vote system, an individual number referred to an identification product, credit number.

To add to the fun of the game, it transmits the number of hit votes (survival votes) and total votes to the mobile terminal of the voter from the server.

### [Effect of the Invention]

Since this invention distributes a game in a plurality of time frames, expecting the score of the play team for each and every time frame, In the first time, the vote that expectation is against assumes disqualification by a sudden death method, only the votes that expectation proved right by the first time frame can advance into the next time frame, afterward repeats the sudden death method, until the final time frame or the time frame which has no hit vote.
If the time frame is a short time such as 5-15 minutes, it would seem that it is enough if four kinds of score possibility 0-0, 0-1, 1-0 and 1-1 are considered , and the probability to be able to survive till the last time frame of this case would be 4⁹( four to the power nine).
So this invention can perform a high point or the large amount of prize money, so can expect an increase of the number of participants,

Also, when each time frame is finished, the prompt transmital of the number of the survival votes to the mobile terminals which voted will make the game more exciting.

### [Simple explanation of the drawings]

FIG. 1 is a block diagram representing the configuration of one embodiment of the system concerning the present invention.
FIG. 2 depicts a flow chart showing the mobile terminal.
FIG. 3 depicts a flow chart showing the server.
FIG. 4 shows an example of the score list displayed on a mobile terminal.

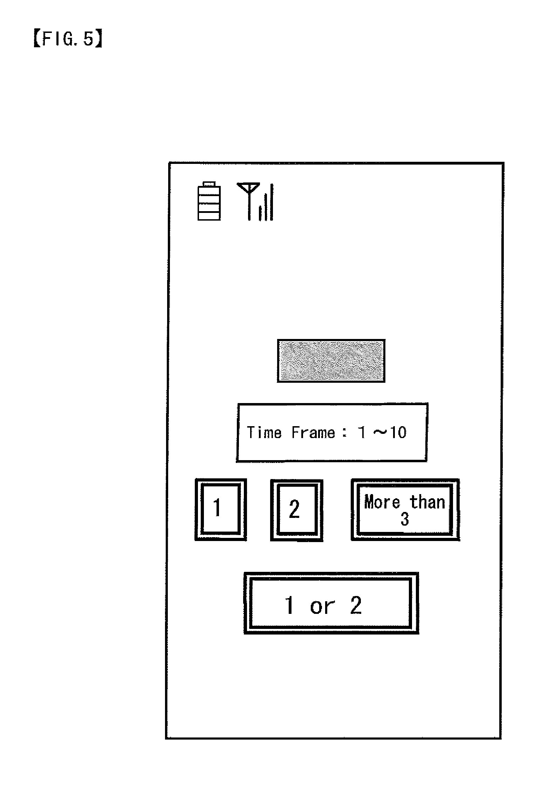

FIG. 5 shows an example of the score list before the score entry.

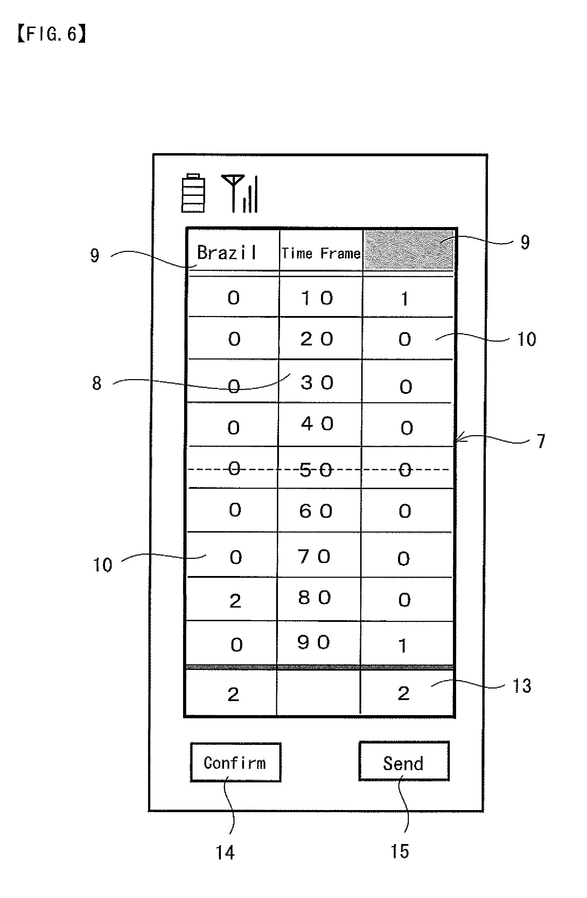

FIG. 6 shows an example of the score list after the score entry.
FIG. 7 shows an example of the another score list

### [Preferred embodiments of the invention]

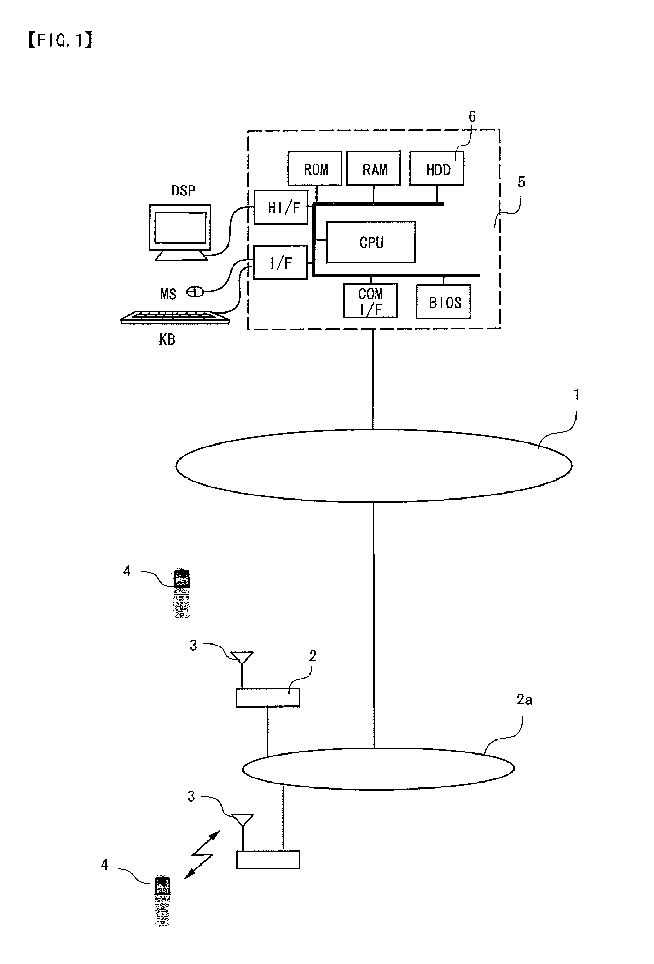

Embodiment of the invention is explained to the attached drawings, as shown in Fig 1, the present invention concerning an expected vote system of the soccer is comprised of network 1 such as the internet, base station 2 communicating to network 1, mobile terminal 4 such as cellular phone communicating base station 2 through antenna 3, an application server 5 with database 6.
The access means from cellular phone 4 to network 1, the networks are usable such as i-mode (registered trademark), EZ network (registered trademark) or Yahoo (registered trademark) mobile phone.

The application server 5 is a server computer having a CPU performing an expected vote system of the present invention.
The server computer is comprised of application software and memory (storage device), the application software includes a communication of SSL in the two-way authentication function to communicate with mobile terminal 4 and a control function of database 6, also the memory stores subject matter received from mobile terminal 4.

The hardware of the applications servers 5 can use general-purpose server computers, and consists of input parts, such as CPU, ROM, RAM, HDD, BIOS, a communications interface part (COM I/F), Keyboard KB, and Mouse MS, and a display DSP. Among these, ROM, RAM, HDD, BIOS, and a communications interface part (COM I/F) are connected with said central processing unit (CPU) through the bus, and Keyboard KB and Mouse MS are connected with said CPU through human interface HI/F.

In the configuration, a read-only memory is storage device for exclusive use of a read out storing a system program.
The CPU is started by a system program memorized by a BIOS and ROM, and the central processing unit has the function executing various processes according to the program (an application program) present in the random access memory.

In addition, the CPU also has a function to which the operation result of the above-mentioned system program, etc., is displayed on a display by making the signal from an input part into a trigger, and RAM has the function for the above-mentioned CPU to memorize a program or the data that it is necessary to properly carry out various top level processes.

The communication interface is made to manage the input and output of a hard disk, communications section interface part, the input part 18, and display.
The display DSP consists of a CRT or LCD monitor and has the function to display the input data from the operation result outside of the CPU by the control of the CPU.
The input units such as the central processing unit (CPU), the read-only memory (ROM), the random access memory (RAM), the hard disk, the communications interface part, the key board or the mouse and the display unit are connected on a central processing unit (CPU) mutually through the bus.

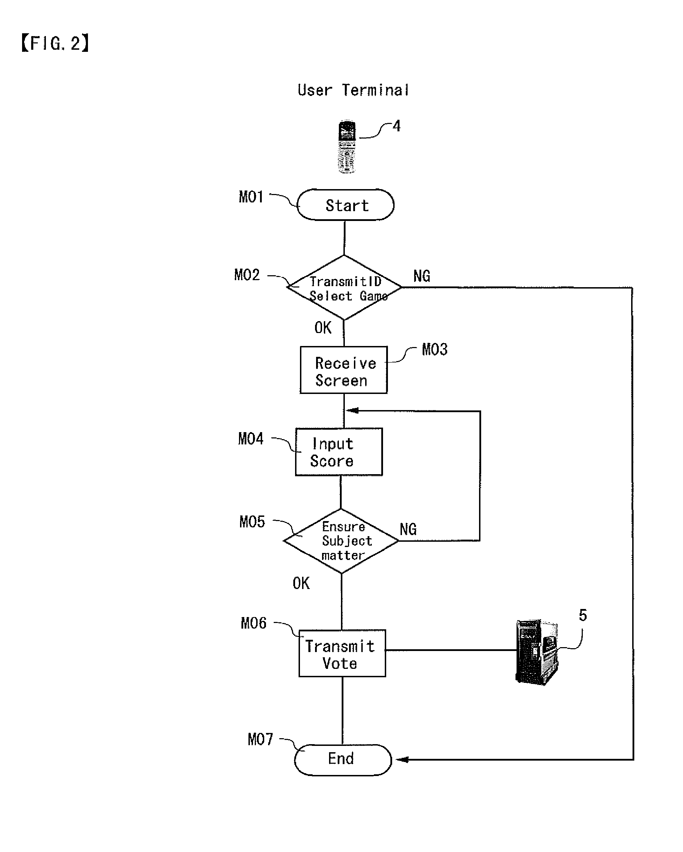

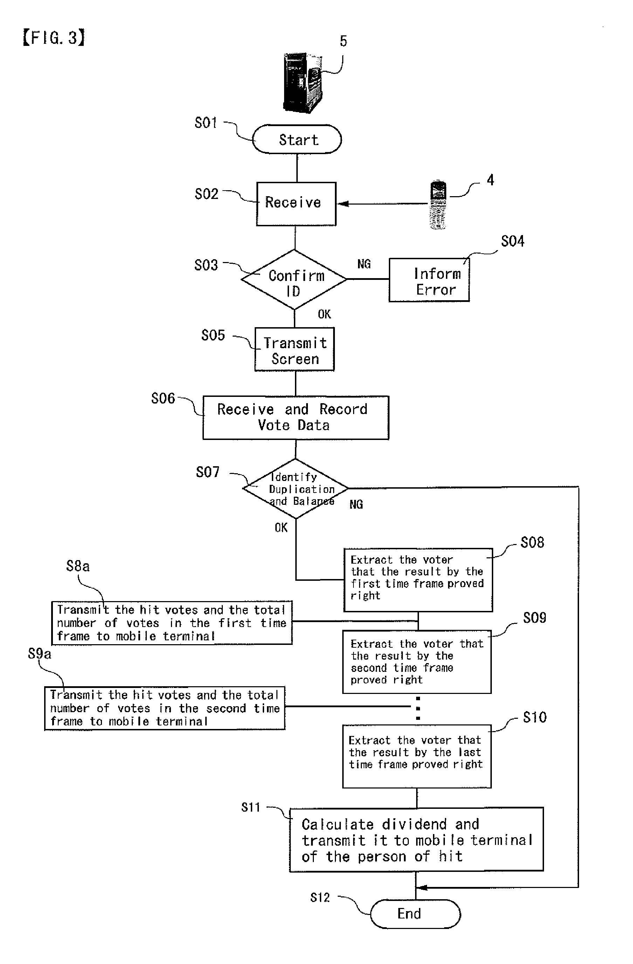

FIG. 2 depicts a flow chart showing the mobile terminal, and Fig. 3 depicts a flow chart showing the server.
When the application server 5 is accessed from mobile terminal 4, coding communication of SSL is performed in cross-certification, after data communication establishment, ID is acquired from mobile terminal 4, acquired ID is verified with registered data, and it is determined whether the vote from the mobile terminal is accepted.
As acquired ID, ID peculiar to a mobile terminal, the individual number of a product written down to the product, a sign-in number will be used.

When it is determined that a vote is not accepted because ID cannot be recognized, so is transmitted to mobile terminal 4, and processing is finished.

When it is determined that a vote is accepted, it judges whether it is the multiple voting to the same game from the same person (same mobile terminal 4). For example, when the individual number of the product is put on the backside of the cap of the drink bottle, reading the individual number with a camera attached mobile terminal.
When it is determined with one vote per one product, the vote after the second from the individual number of the same product is not accepted. Note that it does not make this decision when a multiple voting is accepted.

Then, it is ensured whether there is the money or point left over for vote. When the individual number of the product is used as ID, it does not make this decision.
Note that the judgment such as a multiple voting, the money or point left over, may be conducted after having received the score sheet from a voter.

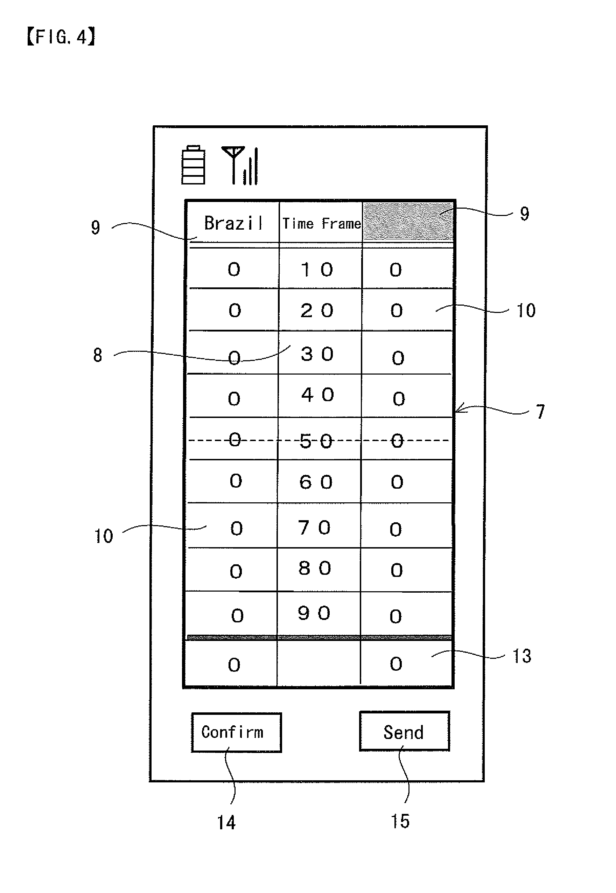

When it is determined that a vote qualification is provided, score sheet 7 for votes is transmitted to mobile terminal 4 from application server 5.
This score, for example, as shown in FIG. 4, time frames 8 are provided in the center in the rectangular frame, and play team name 9 is displayed in right and left of the time frames 8.

In this embodiment, the time from the start to the end of a game is divided into time frames 8 every ten minutes.
For example, in a figure, "20" of the time frame 8 means between 11 minutes and 20 minutes.
Note that the handling of the second assumes a close, for example, the score in ten minutes and one second assumes as the score in 11 minutes. Also, the wide broken line of time frame "50" means the halftime line.

Also on the right and left side of each time frame 8, there are18 score windows 10 displaying the score every team.
Each score window 10 is a window identifying the expected score of the voter, when particular score window 10 is clicked, it is replaced by score selection screen 11 shown in FIG. 4.
Score selection screen 11 is provided with four score button 12a, 12b, 12c and 12d other than a team name and a time frame.

Score button 12a, 12b are buttons when a score expected one or two. Score button 12c is a button when three points of scores expect the above in ten minutes. Since it is a rare case, the scores three points or more are made more than "3" in a mass.
In addition, score button 12d is a button of the multi-business that score expects both of 1 or 2.

It should be noted that, when expected score is " 0 ", just advances to the score window of the next time frame, since the indication of the standard is " 0".
Also, two ways of expected votes would be made when multi-score button 12d was selected, thus, the purchased amount (a point) doubles.
Also, when multi-score button 12d is selected n times, the expected vote of the 2ⁿ ways would be made.
Also, the score button which displayed "0 or 1" in substitution for "1 or 2" may be provided.

As described above, an example filled in with the score up to the final time frame of both teams is FIG. 4.
Score sheet 7 is provided with score indication area 13 of the total
Thus, the voter can confirm whether one's prediction was definitely input.

And to confirm that a prediction is definitely input, click confirm button 14 provided in the lower berth of the score sheet 7.
In this case, it is automatically checked whether there is an omission of entry when there is an omission of entry, this is pointed out.
Then there are no questions, click the send button 15 of the right side of the confirm button 14. and the predictions are transmitted to the application server.

The memory means of the application server 5 saves an expected vote filled according to received score sheet 7

After a game starts, and the first ten minutes have passed, the hit vote in the first time frame becomes clear.
Thus, the application server 5 extracts the hit votes from the data saved in the memory means in the first time frame by extraction means.

The extracted hit votes are counted, counted hit votes are transmitted to mobile terminal 4 with total votes.
For a mobile terminal transmitting a message, it may be only the mobile terminal which made hit votes.

And, when the second time frame has passed, the hit votes in the second time frame becomes clear. Thus, the application server 5 extracts the hit votes in the second time frame by extraction means, extracted hit votes are limited from hit votes of the first time frame. That is, only the votes that proved right twice in succession are extracted.

In this way, the extraction will repeat until (81-90 minutes) in a final time frame, hit votes in (81-90 minutes) are extracted in a final time frame, the numbers are counted, and it is assumed as the final hit votes.
The points or the prize money are divided by this final hit votes, the value becomes the allotment point (dividend) to a hit voter.

The person who receive allotment may not limited to a final hit voter, a hit voter of one or two before time frame may receive allotment, in this case a difference is added to a dividend rate, and it is distributed.
Also, when a final time frame does not have a hit vote, the closest time frame to the final time frame and which has a hit vote is treated as a final time.

As described above, after a final hit votes and allotment point (dividend) has been settled, final allotment point (dividend) is informed to the final hit mobile terminal 4 from the application server 5.
Note that, the allotment point (dividend) will be added to a particular account, or will be transferred to a particular account.

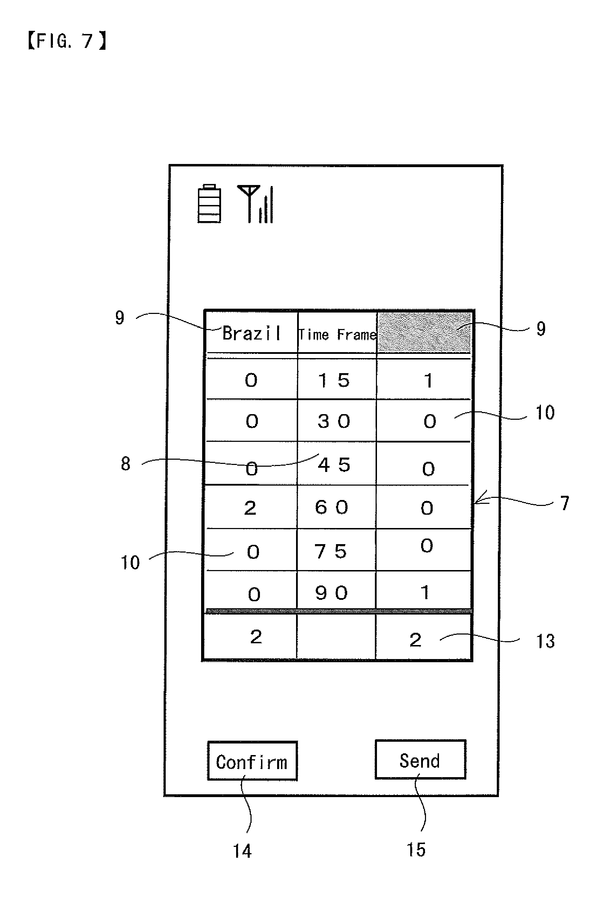

Fig. 7 shows an example of the another score list, in this embodiment, the first half and the second half are distributed for 15 minutes of the early frame, 15 minutes of the middle frame and 15 minutes of the end frame, and the score is expected each time frame.

### [A field of industrial application]

The predicted vote system of soccer concerning the present invention is not suitable for other competitions such as the baseball.
For example, there are nine times of innings for baseball, it is supposed that this inning was applied for ten minutes of the present invention, however, it often happens by the baseball to receive for six points, seven points by 1 inning, it is extremely difficult to predict the score for each inning, since a case without a hit vote is often possible, it rather loses interest.

On the other hand, the present invention is a system devoted to the soccer in consideration of exquisite beauty of the allotment.
Having regard to the fact that a professional league and international soccer match has a normal duration of 90 minutes, it is extremely tare for three points or more to be realized within a time frame of 5-15 minutes.

### [Explanation of the code]

1 ...network, 2 ...base station, 3 ...antenna, 4 ...mobile terminal, 5 ...application server, 6 ...database, 7 ...score sheet, 8 ...time frame, 9 ...play team name, 10 ...score window, 11 ...score selection screen, 1 2 a, 1 2 b , 1 2 c , 1 2 d ...score button, 1 3 ...score indication area, 1 4 ...confirm button, 1 5 ...send button,
M01 ...An application of mobile terminal 4 is started,
M02 ...ID is transmitted, and a game is selected from mobile terminal 4 with a screen,
M03 ...Mobile terminal 4 receives a vote screen from application server 5,
M04 ... Expected score is input with a vote screen,
M05 ...Subject matter of all predictive score of the vote screen is ensured,
M06 ...It is a down-link to application server 5 from mobile terminal 4,
M 0 7 ...An application of mobile terminal 4 is finished,
S01 ...Start of application server 5,
S02 ...The data reception from mobile terminal 4,
S03 ...ID confirmation of mobile terminal 4,
S04 ...When ID of mobile terminal 4 cannot be ensured, it is informed of an error,
S05 ...A vote screen is transmitted to mobile terminal 4,
S06 ...Subject matter of all predictive score of the vote screen is received from mobile terminal 4,
S07 ...The balance is identified as ID of mobile terminal 4,
S08 ...The extraction of the voter that the result by the first time frame proved right,
S08a ...The hit votes by the first time frame and the total number of votes are transmitted to mobile terminal 4,
S09 ...The extraction of the voter that the result by the second time frame proved right,
S09a ...The hit votes by the second time frame and the total number of votes are transmitted to mobile terminal 4,
S 1 0 ...The extraction of the voter that the result by the last time frame proved right,
S 1 1 ...A person of fighting it out is allotted the last after a decision, and it calculates, and it is transmitted to mobile terminal 4 of the person of hit,
S 1 2 ...The end of the program.

## Claims

1. A predicted vote system for soccer comprising an application server which is connected to the network and a mobile terminal which two-way communication is possible such as a cellular phone,
said application server is provided a CPU executing a vote program, and the vote program gives the following functions to the application server,
a transmitting means to transmit a score list to fill in the predicted score to the mobile terminal, the score list is provided the column which divided time from a start time to fulltime of the match every predetermined time,
a determining means to determine ID, the ID that has been transmitted by a mobile terminal is recognized, and the recognized ID is compared with the ID registered with the application server beforehand, when these ID accords, the vote from the mobile terminal is accepted,
a memory means to memorize and store an expected vote connecting with above ID, the (*predicted*) vote is written on a score list from the mobile terminal which is permitted to vote,
an extraction means to extract only hit votes from (*predicted*) votes which are stored in the memory means, at first, compare the real score with the predicted score which is filled in the entry column of the first frame of the score list, and extract only hit votes, and compare the real score with the predicted score which is filled in the entry column of the second frame of the score list, and extract only hit votes, among hit votes extracted in the first frames, this extraction is performed sequentially afterward along the time frame,
a counting means to count the number of hit votes in the last time frames when a hit vote exists,
a computing means to divide the points or the prize money by the number of final hit vote which is counted by the counting means,
a transmitting means to inform the number of hit vote which is extracted by the extraction means to the mobile terminal of the voter after each time frame is finished, and to inform the divided points or prize money to the mobile terminal which made a hit vote that survived until a final time frame, this mobile terminal is identified by ID referenced to the hit vote.
